Europäisches Patentamt

European Patent Office

Office européen des brevets

(11) Veröffentlichungsnummer: **0 058 910**
**B1**

(12) # EUROPÄISCHE PATENTSCHRIFT

(45) Veröffentlichungstag der Patentschrift:
12.12.84

(51) Int. Cl.³: **A 01 D 57/04**

(21) Anmeldenummer: **82101113.7**

(22) Anmeldetag: **16.02.82**

(54) **Landwirtschaftlich nutzbare Maschine.**

(30) Priorität: **20.02.81 US 236396**

(43) Veröffentlichungstag der Anmeldung:
**01.09.82 Patentblatt 82/35**

(45) Bekanntmachung des Hinweises auf die Patenterteilung:
**12.12.84 Patentblatt 84/50**

(84) Benannte Vertragsstaaten:
**DE FR GB**

(56) Entgegenhaltungen:
**DE - A - 2 630 813**
**FR - A - 1 557 449**
**US - A - 2 873 567**
**US - A - 4 167 891**

**Druckschrift von International Harvester Company,
Grain Header 810, OM 1012986 R 1.2-74, S. 8,9
J D 200 Series Cutting Platform, Operator's Manual
OM-H 101511, Ausgabe 18, Seite 9 und 13**

(73) Patentinhaber: **DEERE & COMPANY, 1 John Deere
Road, Moline Illinois 61265 (US)**

(72) Erfinder: **Hutchinson, Eugene Byron, 16504 Rt. 84N, East
Moline Illinois 61244 (US)**
Erfinder: **Dalley, Donald Lewis, 8322 54th Street, Coal
Valley Illinois 61240 (US)**

(74) Vertreter: **Sartorius, Peter et al, DEERE & COMPANY
European Office, Patent Department
Postfach 503 Steubenstrasse 36-42,
D-6800 Mannheim 1 (DE)**

## Beschreibung

Die Erfindung bezieht sich auf eine landwirtschaftlich nutzbare Maschine mit einem Rahmen, an dem eine erste und zweite Arbeitskomponente und eine hydraulische Stellvorrichtung mit einem eine Kolbenstange aufweisenden Linearkolbenmotor angeordnet ist, die zur Steuerung des Abstandes zwischen den beiden Arbeitskomponenten dient und eine dem Linearkolbenmotor zugeordnete Einstellvorrichtung aufweist, wobei der Linearkolbenmotor einenends mittel- oder unmittelbar an der ersten Arbeitskomponente und anderenends an der zweiten Arbeitskomponente angeschlossen ist.

Es ist eine Erntebergungsvorrichtung für einen Mähdrescher mit einer Haspel bekannt (Druckschrift von International Harvester Company, Grain Header 810, OM 1 012 986, RI. 2—74, Seite 8 und 9), wobei zwischen den Tragarmen der Haspel und der Erntebergungsvorrichtung ein über einen Hydraulikmotor betätigbarer Hydraulikzylinder zur Verstellung der Haspel angeordnet ist, dessen eines Ende an die Erntebergungsvorrichtung über einen Gelenkbolzen an verschiedene Anschlußbohrungen anschließbar ist, um somit den Abstand zwischen der Haspel und dem zugehörigen Schneidwerk der Erntebergungsvorrichtung bei einer bestimmten Stellung des Hydraulikzylinders zu verändern.

Eine ähnliche Vorrichtung ist bei einem anderen Mähdrescher bekannt (JD 200 Series Cutting Platform, Operator's Manual OM-H 101 511, Ausgabe 18, Seite 9 und 13), dessen Hydraulikzylinder zur Verstellung der Haspel eine verschwenkbare Arretierungsvorrichtung aufweist, die bei ausgefahrener Kolbenstange des Hydraulikzylinders in eine Arretierungsstellung verschwenkbar ist, in der eine Rückstellung der Kolbenstange in den Hydraulikzylinder verhindert wird.

Es ist auch ein längenveränderlicher Lenker bekannt (US-PS 4 167 891), der aus einem Hydraulikzylinder besteht, der mit einem Lagerauge ausgerüstet ist. Der Hydraulikzylinder weist eine Kolbenstange auf, die in den Hydraulikzylinder ein- und ausfahrbar ist. Am freien Ende der Kolbenstange ist ebenfalls ein Lagerauge angeschlossen, das hierzu über ein Gewindestück in eine Sacklochbohrung des freien Endes der Kolbenstange einschraubbar und über eine Mutter sicherbar ist. Ist beispielsweise der längenveränderliche Lenker zwischen zwei Arbeitswerkzeugen angeordnet und soll der Abstand zwischen diesen beiden Arbeitswerkzeugen verändert werden, so muß zumindest das eine Lagerauge von dem Arbeitswerkzeug gelöst werden, damit die maximale Gesamtlänge des längenveränderlichen Lenkers verändert werden kann.

Es ist ferner ein Hydraulikzylinder zur Verstellung einer Haspel auf einer Erntebergungsvorrichtung bekannt (US-PS 2 873 567), der mit einer ein- und ausfahrenden Kolbenstange versehen ist, die an ihrem oberen Ende eine Feineinstellvorrichtung aufweist, die aus einem zweiarmigen Hebelarm besteht, der in etwa mittig über einen Schraubenbolzen an das freie Ende der Kolbenstange beweglich angeschlossen ist. Das eine freie Ende des zweiarmigen Hebels ist über einen Gelenkbolzen mit dem Tragarm der Haspel gelenkig verbunden, während das andere freie Ende über einen Schraubenbolzen mit dem Tragarm der Haspel verbunden ist. Der Schraubenbolzen ist mittels zweier gegenüberliegender Muttern an dem freien Ende des Tragarms gesichert. Durch Lösen dieser beiden Muttern läßt sich der Schraubenbolzen nach oben bzw. nach unten verschieben und somit der minimale Abstand zwischen der Haspel und dem Schneidwerk der Erntebergungsvorrichtung verändern. Eine derartige Feineinstellung der Haspel mit Bezug auf das Schneidwerk ist ohne zusätzliches Arbeitswerkzeug nicht möglich. Außerdem ist die Feineinstellvorrichtung relativ aufwendig.

Der Erfindung liegt die Aufgabe zugrunde, eine Stellvorrichtung zwischen zwei Arbeitskomponenten bzw. zwischen zwei Arbeitswerkzeugen einer landwirtschaftlich nutzbaren Maschine so auszubilden und anzuordnen, daß der Abstand zwischen den beiden Arbeitskomponenten auch ohne Einsatz eines Linearkolbenmotors und ohne Zuhilfenahme von Werkzeugen in kürzester Zeit veränderbar ist und ohne zusätzliche Mittel eine Arretierung des zugehörigen Linearkolbenmotors in einer bestimmten Stellung möglich ist. Diese Aufgabe wird dadurch gelöst, daß die Einstellvorrichtung derart in den Linearkolbenmotor integriert ist, daß sie unabhängig von der Bedienung des Linearkolbenmotors zur Einstellung des Abstandes zwischen den beiden Enden des Linearkolbenmotors einsetzbar ist und hierzu ein Stellelement aufweist, das mit dem Linearkolbenmotor bzw. der Einstellvorrichtung in Wirkverbindung bringbar und zwischen zwei Arbeitsstellungen verstellbar ist, wobei mittels des Stellelementes in der einen Arbeitseinstellung die Einstellvorrichtung betätigbar und in der zweiten Stellung die Rückstellung des Linearkolbenmotors begrenzbar ist. Durch die vorteilhafte Ausbildung und Anordnung des Linearkolbenmotors mit der zugehörigen Einstellvorrichtung, die auf platzsparende Weise in den Linearkolbenmotor integriert worden ist, läßt sich in jeder beliebigen Stellung des Linearkolbenmotors eine Feineinstellung zwischen den beiden Arbeitskomponenten vornehmen, ohne daß hierzu zusätzliche Arbeitswerkzeuge notwendig sind. In vorteilhafter Weise lassen sich auch die Stellelemente so dem Linearkolbenmotor zuordnen, daß in einer bestimmten Betriebsstellung des Linearkolbenmotors eine Arretierung möglich ist, so daß eine Rückverstellung des Linearkolbens verhindert wird und auch ein unbeabsichtigtes Verstellen des Linearkolbens ausgeschlossen werden kann, um beispielsweise eine Bedienungsperson, die an einer der Arbeitskomponenten eine Wartungsarbeit ausführen muß, nicht durch plötzliches Verstellen des Linearkolbenmotors zu gefährden. Um auch eine genaue Einstellung einer Arbeitskomponente gegenüber einer anderen Arbeitskomponente zu erreichen, wenn diese relativ breit und somit nicht ohne weiteres verstellbar sind, kann neben dem ersten Linearkolbenmotor mindestens ein zweiter gleich ausgebildeter Linearkolbenmotor vorgesehen sein, der mit Abstand zum ersten Linearkolbenmotor angeordnet ist und in dem ebenfalls eine Einstellvorrichtung integriert ist, wodurch eine Verstellung der einen Arbeitskomponente über die gesamte Breite erleichtert wird. Da die Einstellvorrichtung an beiden Linearkolbenmotoren angeordnet ist, läßt sich eine genaue Ausrichtung der einen Arbeitskomponente gegenüber der anderen Arbeitskomponente erreichen.

Die Einstellvorrichtung läßt sich auch in vorteilhafter Weise zwischen einer Haspel und einer Erntebergungsvorrichtung eines Mähdreschers einsetzen und hierzu im Hydraulikzylinder zur Verschwenkung der Haspel integrieren. Hierzu ist es vorteilhaft, daß die die Einstellvorrichtung integrierend aufnehmenden Linearkolbenmotoren je einen Hydraulikzylinder mit je einer Kolbenstange aufweisen, in deren freies bzw. äußeres Ende eine Gewindebohrung zur drehbaren Aufnahme einer Kolbenstangenverlängerung mit einem Gewindeteil konzentrisch vorgesehen ist, die über eine Gelenkverbindung an Tragarmen der Haspel angeschlossen ist. Ist beispielsweise die Kolbenstange des Hydraulikzylinders vollständig eingefahren, so läßt sich die Kolbenstangenverlängerung ohne weiteres in die Kolbenstange hineindrehen bzw. herausdrehen und dabei die Haspel genau zum Schneidwerk der Erntebergungsvorrichtung ausrichten, insbesondere dann, wenn liegendes Erntegut mittels der Schneidwerksvorrichtung abgetrennt und über die Einzugsorgane der Erntebergungsvorrichtung erfaßt werden soll. Die Kolbenstangenverlängerung läßt sich auf Grund ihrer Länge bei eingefahrener Kolbenstange nur so weit in die Kolbenstange einschrauben, bis ein minimaler Abstand zwischen den Zinkenspitzen und dem Schneidwerk erreicht ist. Darüber hinaus läßt sich die Kolbenstangenverlängerung nicht weiter verstellen, so daß verhindert wird, daß Zinken in das Schneidwerk greifen. Die Verstellung der Kolbenstangenverlängerung hat jedoch keine Auswirkung auf die Hublänge der Kolbenstange, so daß der gesamte Stellweg der Haspel bei Verstellung der Kolbenstange des Hydraulikzylinders nicht durch Verstellung der Kolbenstangenverlängerung beeinflußt wird. Durch die Kolbenstangenverlängerung wird also lediglich die Höhenlage der Haspel mit Bezug auf die Schneidwerksvorrichtung verändert. Hierzu ist es gemäß der Erfindung vorteilhaft, daß der Hydraulikzylinder eine Kolbenstange mit einem als Arretierungsvorrichtung ausgebildeten Hebel aufweist, der in eine bestimmte Stellung verschwenkbar und zur axialen Verstellung der Kolbenstangenverlängerung als Drehmomentarm einsetzbar ist. Da an die Kolbenstangenverlängerung ein Hebel schwenkbar angeschlossen ist, läßt sich nach Hochschwenken des Hebels die Kolbenstangenverlängerung über den Hebel ohne weiteres verstellen, ohne daß ein zusätzliches Arbeitswerkzeug notwendig ist. Somit läßt sich auf einfache Weise der Abstand zwischen zwei Arbeitskomponenten bzw. zwischen Haspel und Schneidwerksvorrichtung ohne weiteres verändern. Ist beispielsweise die Kolbenstange des Hydraulikzylinders zur Verstellung der Haspel vollständig ausgefahren, so läßt sich in der ausgefahrenen Stellung der Kolbenstange der Hebel in eine Stellung verschwenken, in der eine Rückverstellung der Kolbenstange verhindert wird.

Nach einem weiteren Merkmal der Erfindung ist es vorteilhaft, daß der Hebel auf der Kolbenstange axial verschiebbar angeordnet ist und zwischen einer Stellung, in der der Hebel frei drehbar gelagert ist und einer zweiten Stellung verstellbar ist, in der der Hebel in eine drehfeste Verbindung mit der Kolbenstangenverlängerung bringbar ist. Da der Hebel auf der Kolbenstangenverlängerung axial verschiebbar angeordnet ist, läßt er sich ohne weiteres zwischen zwei Positionen verstellen, wobei in der einen Stellung für den Hebel eine drehfeste Verbindung geschaffen wird, die es gestattet, den Abstand zwischen dem äußeren Ende der Kolbenstange und dem äußeren Ende der Kolbenstangenverlängerung zu verändern, ohne daß die Kolbenstangenverlängerung von ihrer Halterung gelöst zu werden braucht. Hierzu ist es vorteilhaft, daß der Hebel gelenkig an die Kolbenstangenverlängerung mittel- oder unmittelbar angeschlossen ist und für den Ernteeinsatz zwischen einer Ruhestellung und einer Arretierungsstellung verstellbar ist, wobei in der Arretierungsstellung die Kolbenstange aus dem Hydraulikzylinder herausgefahren ist und der Hebel gegen eine Stirnfläche des Hydraulikzylinders zur Anlage bringbar ist. Ferner ist es vorteilhaft, daß am freien Ende der Kolbenstange eine Mutter mit einem inneren Gewindeteil lösbar und drehfest angeschlossen ist, das zur Aufnahme der Kolbenstangenverlängerung dient, an deren innerem Ende ein Arretierungselement vorgesehen ist, das ein Herausdrehen der Kolbenstangenverlängerung aus der Mutter verhindert. Außerdem ist es vorteilhaft, daß die Gelenkverbindung zwischen dem Hebel und der Mutter aus einem eine Mehrkantöffnung aufweisenden, an den Hebel schwenkbar angeschlossenen Ring besteht, der auf einen auf der Mutter vorgesehenen Mehrkantteil und einen sich daran anschließenden zylindrischen Körper wechselweise aufschiebbar ist, an den sich ein zylindrischer Flansch anschließt, der in der Arretierungsstellung des Hebels eine weitere Axialverstellung des Hebels und des Ringes verhindert. Da der Hebel gelenkig über den Ring mit der Mutter der Kolbenstangenverlängerung verbunden ist, läßt sich die Mutter über den Hebel alleine oder gemeinsam mit der Kolbenstange ohne weiteres drehen, nachdem der Hebel beispielsweise in eine annähernd waagerechte Lage gebracht worden ist, wobei er zwischen seiner unteren Seite und dem Außenumfang der Kolbenstangenverlängerung einer annähernd rechten Winkel einschließt.

Um eine drehfeste Verbindung zwischen dem Hebel bzw. dem zugehörigen Ring, der mit einer Mehrkantbohrung ausgestattet, ist und der Mutter der Kolbenstangenverlängerung herzustellen, wird der Ring auf die Mutter axial aufgeschoben, bis der Ring auf dem Mehrkantteil der Mutter sitzt. Danach läßt sich die Mutter über den Hebel ohne weiteres drehen und verstellt dabei die Kolbenstangenverlängerung in Axialrichtung, die an ihrem oberen Ende unverdrehbar an eine Arbeitskomponente bzw. an den Tragarm der Haspel angeschlossen ist. Außerdem ist es vorteilhaft, daß der Hebel aus zwei mit Abstand zueinander angeordneten Seitenteilen besteht, die über einen Steg miteinander verbunden sind, wobei der Hebel einenends zwei Gelenkbolzen zum Anschluß des Ringes und anderenends eine federelastische Sicherung aufweist, die den Hebel an der Kolbenstange in der die Kolbenstange arretierenden Stellung sichert. Vorteilhaft ist es ferner, daß die Kolbenstangenverlängerung gelenkig, jedoch drehfest mit einem Tragarm der Haspel verbunden ist, wobei die Mutter in einer Bohrung der Kolbenstange bzw. in einer Buchse drehbar oder auch drehfest sowie axial unverschiebbar aufgenommen ist. Hierdurch wird gewährleistet, daß durch Drehen der Mutter, die in der Kolbenstange drehbar aufgenommen ist, eine Axialverschiebung der Kolbenstangenverlängerung erreicht wird. Es ist jedoch auch möglich, die Mutter mit der Kolbenstange drehfest zu verbinden, so daß beim Drehvorgang der Mutter die Kolbenstange mitgedreht wird. Das Drehen der Kolbenstange durch die Mutter hat jedoch keinen negativen Einfluß auf die Kolbenstangenverstellung. Durch diesen Vorgang wird jedoch auch gewährleistet, daß die Kolbenstangenverlängerung axial verschoben wird, da diese sich durch Drehen der Mutter aus der Gewindebohrung der Mutter heraus- bzw. hineindreht. Da die Mutter endseitig mit einem Flansch versehen ist und der U-förmig ausgebildete Hebel auf die Kolbenstange aufgeschwenkt werden kann, kann der Hebel in der ausgefahrenen Stellung der Kolbenstange als Arretierungsvorrichtung dienen. Hierzu wird der Hebel an die Kolbenstange herangeschwenkt und stützt sich einerseits gegen den Flansch der Mutter und andererseits gegen die Stirnfläche des Hydraulikzylinders ab. Hierdurch wird gewährleistet, daß in der ausgefahrenen Stellung des Hydraulikzylinders kein unbeabsichtigtes Zurückstellen der Kolbenstange erfolgt, insbesondere dann, wenn Arbeiten am Gerät notwendig sind. Damit der Hebel in seiner Arretierungsstellung nicht verstellt werden kann, umgreift die federelastische Sicherung die Kolbenstange und verhindert ein Verschwenken des Hebels. Die federelastische Sicherung ist so ausgebildet, daß durch Hochschwenken des Hebels die federelastische Sicherung ohne weiteres von der Kolbenstange abgezogen werden kann.

Vorteilhaft ist es bei einem anderen Ausführungsbeispiel, daß die Kolbenstangenverlängerung an ihrem dem Gewindeteil gegenüberliegenden Ende einen über Sicherungsteile axial unverschiebbaren Drehflansch aufweist, der über Gelenkbolzen an den Tragarm schwenkbar angeschlossen ist. Durch die Verwendung eines Drehflansches am oberen Ende der Kolbenstangenverlängerung kann auf die Mutter verzichtet werden. Die Kolbenstange braucht lediglich mit einem Vierkantteil zur Aufnahme des Ringes und das obere Ende der Kolbenstange mit einer Gewindebohrung zur Aufnahme des Gewindeteils der Kolbenstangenverlängerung ausgerüstet sein. Wird nun die Kolbenstangenverlängerung mittels des Hebels und des Ringes gedreht, so wird die Kolbenstangenverlängerung aus der Gewindebohrung heraus- bzw. hineingeschraubt und somit die wirksame Gesamtlänge der Kolbenstange verändert.

Die drehfeste Verbindung zwischen Ringschlüsselteil und Mutter kann anders ausgebildet sein. Beispielsweise können die Flächen, die eine Formschluß- bzw. eine Kraftschlußverbindung zwischen beiden Teilen herstellen, konisch verlaufen, aufgerauht bzw. gerillt sein. Ferner ist es möglich, die Mutter sowie den Ringschlüsselteil zur Drehmomentübertragung mit mindestens je einer flachen Fläche zu versehen. Um jedoch ein Verkanten zwischen Ringschlüsselteil und Mutter zu vermeiden ist es vorteilhaft, Ringschlüsselteil und Mutter jeweils mit mehreren flachen Flächen zu versehen.

In der Zeichnung ist ein Ausführungsbeispiel einer Stellvorrichtung einer Erntebergungsvorrichtung nach der Erfindung schematisch dargestellt. Es zeigt

Fig. 1 eine Seitenansicht der Erntebergungsvorrichtung mit der erfindungsgemäßen Stellvorrichtung;

Fig. 2 einen Längsschnitt entlang der Linie 2-2 gemäß Fig. 4;

Fig. 3 das Anschlußende eines Hebels an das obere Ende einer Kolbenstange eines Hydraulikzylinders, wobei die einzelnen Teile vor dem Zusammenbau in perspektivischer Darstellung widergegeben sind;

Fig. 4 einen Längsschnitt entlang der Linie 4-4 gemäß Fig. 1;

Fig. 5 einen Querschnitt entlang der Linie 5-5 gemäß Fig. 4.

In der Zeichnung ist mit 10 eine Erntebergungsvorrichtung bezeichnet, die beispielsweise an eine Erntemaschine, insbesondere an einen Mähdrescher angebaut werden kann. Die Erntebergungsvorrichtung 10 ist mit dem vorderen Ende eines Schrägfördergehäuses 12 fest verbunden, das gelenkig an ein in der Zeichnung nicht dargestelltes Gehäuse eines Mähdreschers anschließbar ist, und in dem ein Elevatorförderer 14 vorgesehen ist, der das von der Erntebergungsvorrichtung 10 aufgenommene Erntegut einem im Mähdrescher vorgesehenen Dreschzylinder zuführt. Die Arbeitshöhe der Erntebergungsvorrichtung 10 mit Bezug auf den Boden wird über zwei mit Abstand zueianander angeordneten Hydraulikzylindern 16 eingestellt. An dem in der Zeichnung nicht dargestellten Rahmen der Erntebergungsvorrichtung 10 ist eine Rückwand 18 angeschlossen, an die sich ein nach vorne erstreckender Boden 20 sowie zwei gegenüberliegende Seitenwände 22 anschließen. Der entsprechenden Seitenwand 22 ist je ein Halmteiler 24 zugeordnet. Eine jede Seitenwand 22 ist zur Abstützung einer Haspel 30 mit einer Halterung 26 ausgerüstet, die zur Aufnahme eines Gelenkbolzens 52 zahlreiche untereinander angeordnete Bohrungen 28 aufweist. Die Haspel 30 ist eine Aufnehmerhaspel.

Die Haspel 30 weist zahlreiche sich nach vorne bzw. unten erstreckende Zinken 31 auf, die die Zufuhr des Erntegutes zu einem Schneidwerk 32 am vorderen Ende der Erntebergungsvorrichtung 10 steuert. Das von dem Schneidwerk 32 abgetrennte Erntegut gelangt in den Einzugsbereich einer Einzugsschnecke 34, die das Erntegut zur Mitte zusammenzieht und es nach hinten über den Boden 20 der Erntebergungsvorrichtung 10 in das Schrägfördergehäuse 12 abgibt. Die Haspel 30 lagert mittels einer Welle in gegenüberliegend angeordneten Halterungen 40, die auf sich nach vorne erstreckenden Tragarmen 42 angeordnet sind. Die Tragarme sind jeweils endseitig an Halterungen 44 schwenkbar angeschlossen, die an der Rückwand 18 der Erntebergungsvorrichtung 10 vorgesehen sind. An der Unterseite, in etwa in der Mitte zwischen dem vorderen und hinteren Ende des Tragarmes 42, befindet sich je eine Halterung 46 zum gelenkigen Anschluß einer hydraulischen Stellvorrichtung 50.

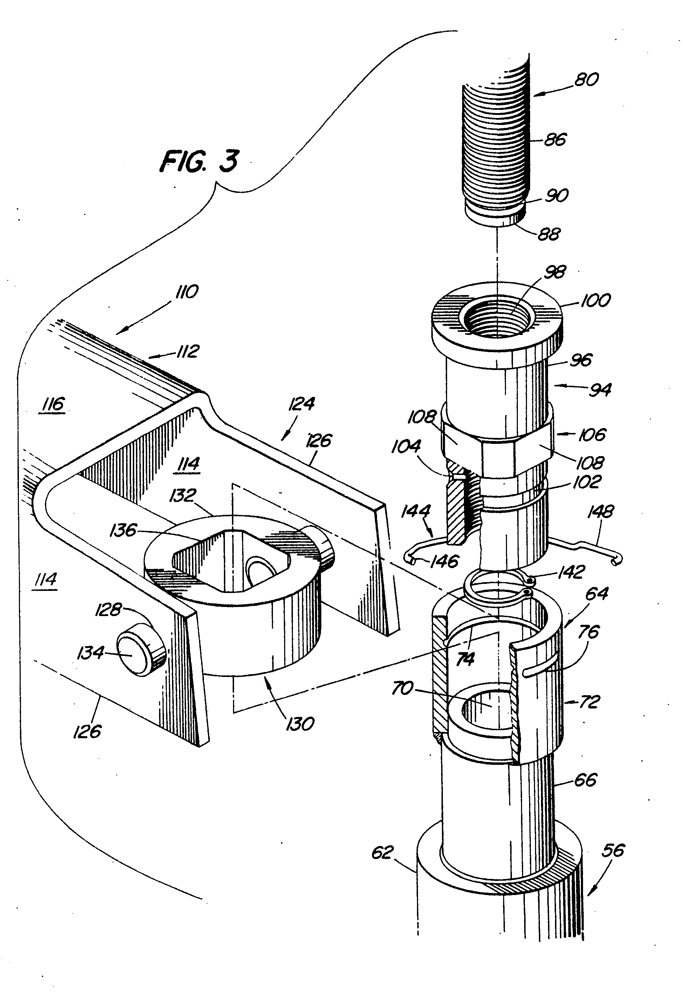

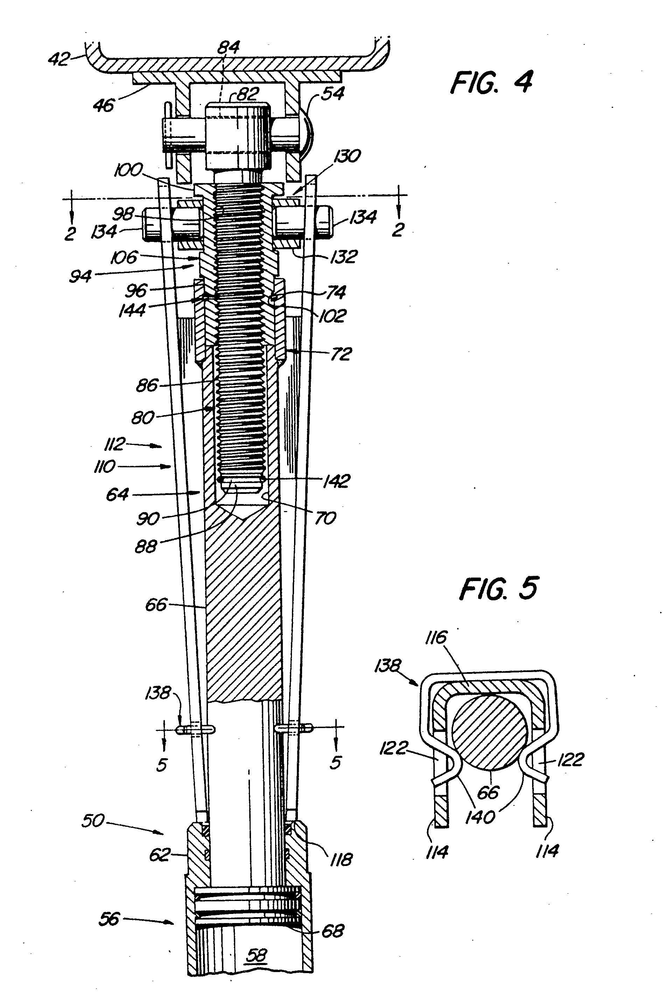

Im Bereich einer jeden Seitenwand 22 der Erntebergungsvorrichtung 10 befindet sich je eine einfach wirkende hydraulische Stellvorrichtung 50 zur Verstellung der Haspel 30. Die hydraulische Stellvorrichtung 50 ist einenends gelenkig über den Gelenkbolzen 52 an die Halterung 26 der Seitenwand 22 und anderenends über einen Gelenkbolzen 54 an die Halterung 46 des Tragarmes 42 gelenkig angeschlossen. Die hydraulische Stellvorrichtung 50 zur Verstellung der Haspel 30 weist einen in der Zeichnung nicht dargestellten Servozylinder sowie einen Hauptzylinder auf. Aus der nachfolgenden Beschreibung geht hervor, daß die Erfindung bei jedem Linearkolbenmotor verwendbar ist, beispielsweise bei einfach wirkenden oder doppelt wirkenden Hydraulikzylindern, alleine oder in Verbindung mit anderen Hydraulikzylindern. Wie aus Fig. 3 und 4 hervorgeht, weist ein jeder Zylinder 56 der hydraulischen Stellvorrichtung 50 eine Zylinderkammer bzw. Bohrung 58 auf, die über eine Druckmittelleitung 60 an eine in der Zeichnung nicht dargestellte Kraftwelle, beispielsweise an eine Pumpe des Mähdreschers angeschlossen ist. Das kolbenstangenseitige Ende bzw. das obere Ende (Fig. 4) des Hydraulikzylinders 56 dient zur Aufnahme bzw. Abstützung einer Kolbenstangeneinrichtung 64, zu der eine Kolbenstange 66 gehört, die an ihrem inneren Ende, also in der Kammer 58, einen Kolben 68 aufweist. Das äußere bzw. das freie Ende der Kolbenstange 66 ist mit einer tiefen, mittig angeordneten sackförmigen Bohrung 70 versehen, an dessen oberes Ende eine zylindrische Buchse 72 konzentrisch angeschlossen und mit diesem fest verbunden ist. Im oberen bzw. im Bereich des freien Endes der Buchse 72 befindet sich eine innere Ringnut 74, die durch einen sich in Umfangsrichtung erstreckenden Schlitz 76 unterbrochen ist, der die Wand der Buchse 72 durchdringt (siehe Fig. 3).

Die Kolbenstangeneinrichtung 64 weist ferner ein Kolbenstangenverlängerungsstück 80 auf, das die Form einer Rundkopfschraube haben kann und die hierzu mit einem zylindrischen Rundkopf 82 versehen ist, in dem eine Querbohrung 84 vorgesehen ist. Die Rundkopfschraube 80 weist einen Schraubenschaft auf, der fast über seine gesamte Länge mit einem Gewinde 86 versehen ist, dessen unteres Ende 88 im Durchmesser kleiner ist als der Gewindeteil und das mit einer Ringnut 90 ausgerüstet ist. Eine etwas länglich ausgebildete Mutter 94 ist mit einem zylindrischen Körper 96 versehen, in dem eine Gewindebohrung 98 zentrisch vorgesehen ist und, wie aus Fig. 4 hervorgeht, an seinem oberen Ende einen Flansch 100 aufweist. Im unteren Bereich der Mutter 94 befindet sich eine äußere Ringnut 102, die über eine Bohrung 104 mit dem Innenraum bzw. der Gewindebohrung 98 der Mutter 94 verbunden ist. Die Bohrung kann, wie aus Fig. 3 hervorgeht, sich radial nach innen erstrecken. Zwischen dem Flansch 100 und der Ringnut 102 des Zylinderkörpers 96 ist ein im Durchmesser größeres Andrehstück in Form einer Mutter 106 bzw. eines Vierkantteils vorgesehen, die mit vier konzentrisch angeordneten Flächen 108 versehen ist, auf die ein Gabelschlüssel aufgesetzt werden kann.

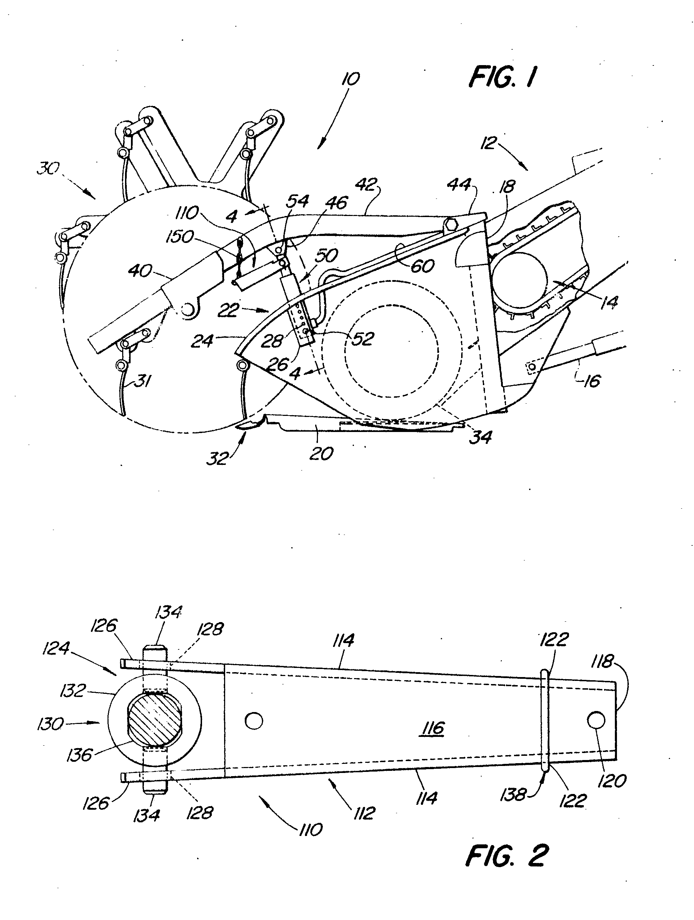

Eine kombinierte Sicherheitsstoparm-Vorrichtung und Ringschlüsseleinrichtung 110 weist, wie aus Fig. 3 hervorgeht, einen im Querschnitt U-förmig ausgebildeten Griff bzw. Hebel 112 auf, der aus zwei gegenüberliegend angeordneten Seitenteilen 114 besteht, die über einen Steg 116 miteinander verbunden sind. Wie aus Fig. 3 und 5 hervorgeht, verjüngt der Griff 112 sich allmählich zu einer rechteckförmigen Stopfläche 118. In der Nähe der Stopfläche 118 befindet sich im Steg 116 eine Bohrung 120 (Fig. 2) und etwas weiter von der Stopfläche 118 entfernt zwei gegenüberliegende Schlitze 122, die in den Seitenteilen 114 vorgesehen sind.

Am gegenüberliegenden Ende des Griffes 112 ist der U-förmige Teil etwas abgewandelt und ein Teil des Steges 116 weggelassen, so daß die Seitenteile 114 ein gabelförmiges Teil 124 bilden (Fig. 3). Der gabelförmige Teil 124 weist zwei gegenüberliegende Schenkel 126 auf, wobei ein jeder mit einer Gelenkbohrung 128 versehen ist. Ein Gelenkteil bzw. ein Ring 130 ist quer und drehbar an die Gelenkbohrung 128 angeschlossen. Der Gelenkteil 130 besteht aus einem Schrauben- bzw. Ringschlüsselteil 132 mit gegenüberliegend angeordneten, sich nach außen erstreckenden Gelenkbolzen 134, die von den Gelenkbohrungen 128 aufgenommen sind. Eine Durchdringung 136, die an je zwei gegenüberliegenden Stellen mittels zwei Flächen abgeflacht ist und in dem Ringschlüsselteil 132 vorgesehen ist, weist einen Durchmesser auf, der etwas größer ist, als der der Durchdringung 136 angepaßte Vierkantteil 106 der Mutter 94 mit ihren flachen Flächen 108. Eine Federklammer 138 dient zur Sicherung und Festlegung des Griffes 112 auf der Kolbenstange 66. Die Federklammer 138 weist zwei gegenüberliegende, hakenförmig ausgebildete, federnde Schenkel 140 auf, die in die Schlitze 122 eingreifen. Die Kolbenstangeneinrichtung 64 der hydraulischen Stellvorrichtung 50, insbesondere die Kolbenstange 66 wird auf einfache Weise in den Hydraulikzylinder 56 eingesetzt. Zum Einbau der Kolbenstangeneinrichtung 64 muß zuerst der Hebel 112 an die Mutter 94 angeschlossen werden, indem die Mutter 94 in die Durchdringung 136 des Ringschlüsselteils 132 eingesetzt wird, so daß der Ringschlüsselteil 132 zwischen dem Flansch 100 und der Ringnut 102 in entsprechender Weise positioniert werden kann. Danach wird die Mutter 94 auf die Rundkopfschraube 80 aufgeschraubt und zwar so weit, daß die Ringnut 90 freiliegt, so daß ein Spannring 142 in die Ringnut 90 eingesetzt werden kann. Dieser Teilzusammenbau kann nun in die Buchse 72 eingesetzt werden, deren eines Ende an die Kolbenstange 66 fest angeschlossen ist, und zwar so, daß die Mutter 94 in der Buchse 72 gegen eine Drehbewegung und eine Axialbewegung gesichert ist. Um den Einbau zu erleichtern, kann hierzu ein federnder Sicherungsring 144 (Fig. 3) verwendet werden. Die Vormontage (dazu gehört die Rundkopfschraube 80 und der Spannring 142) wird in die Buchse 72 eingeführt und so ausgerichtet, daß die Bohrung 104 der Mutter 94 genau zu dem Schlitz 76 ausgerichtet ist. Das freie äußere Ende bzw. der kleine Stift 146 an dem entsprechenden Ende des Sicherungsringes 144 wird in die Bohrung des Sicherungsringes 144 eingesetzt und dann wird die Mutter 94 in die Buchse 72 hineingedreht, so daß sich der Spannring 142 in die Ringnut 102 und die Ringnut 74 legt. Durch weiteres Drehen der Mutter 94 rastet der Schenkel 148 in dem Schlitz 76 ein. Somit läßt sich auf wirkungsvolle Weise die Mutter 94 an der Buchse 72 axial sichern sowie mit ihr drehfest verbinden.

Die vollständige hydraulische Stellvorrichtung 50 kann nun an der Erntebergungsvorrichtung (Fig. 1) installiert werden. Hierzu werden die Gelenkbolzen 52 und 54 durch die entsprechenden Bohrungen an den Enden der hydraulischen Stellvorrichtung 50, der Halterung 26 und der Halterung 46 eingeführt. Der Stoparm 110 bzw. der Hebel 112 kann dann unter dem Tragarm 42 der Haspel 30 geschwenkt werden und eine Zugkette 150, die am Tragarm 42 angeschlossen ist, in die Bohrung 120 eingehakt werden, um den Stoparm 110 bzw. den Hebel 112 während des Feldeinsatzes zu arretieren (Fig. 1).

Die Feineinstellung die durch die erfindungsgemäße Stellvorrichtung 50 für die Haspel 30 möglich ist, ist insbesondere dann von großem Nutzen, wenn im niederliegenden Erntegut geerntet wird. Um nun Verluste zu reduzieren, kann die Haspel 30 so nah wie möglich an das Schneidwerk 32 herangeführt werden (Fig. 1). Die zahlreichen Einstellmöglichkeiten, die durch die Bohrungen 28 in der unteren Halterung 26 möglich sind, ergeben jedoch nicht eine so genaue Ausrichtung der Haspel 30 zum Schneidwerk 32. Um jedoch eine sehr genaue Ausrichtung der Enden der Zinken 31 mit Bezug auf das Schneidwerk 32 herzustellen, reicht die Einstellung durch die verschiedenen Anschlußmöglichkeiten der hydraulischen Stellvorrichtung 50 an der Halterung 26 nicht aus. Ein sehr genauer Abstand zwischen der Haspel 30 bzw. der Aufnahmehaspel und dem Schneidwerk läßt sich mit der Stellvorrichtung 50 vornehmen, wobei die einzelnen Zinkenenden auf der gesamten Breite der Haspel genau parallel zum Schneidwerk ausgerichtet werden können. Eine derartige Ausrichtung der Haspel 30 kann auf einfache Weise durchgeführt werden, ohne daß hierzu besondere Gabelschlüssel oder andere Werkzeuge benötigt werden. Durch die entsprechende Einstellung wird die Länge des Ausschubs der Kolbenstange 66 der hydraulischen Stellvorrichtung 50 nicht beeinflußt, jedoch ihre wirksame Länge, so daß die äußerste obere und untere Lage der Haspel 30 verändert werden kann.

Um die gewünschte Einstellung für die Haspel 30 vornehmen zu können, wird der Hebel 112 aus seiner Ruhelage herausgelöst, indem die Kette 150 ausgehangen und der Ringschlüsselteil 132 auf dem Vierkantteil 106 der Mutter 94 aufgeschoben wird. Die Drehverbindung des Stoparmes 110 mit der hydraulischen Stellvorrichtung 150 stellt eine Anwendungsmöglichkeit dar. Wird die Hebelwirkung des Stoparmes 110 genutzt, so kann die Mutter 94 in beiden Richtungen verstellt werden, um die Kolbenstangeneinrichtung 64 entweder zu verlängern oder zu verkürzen. Die Kolbenstange 66 wird durch die drehfeste Verbindung der Mutter 94 mit der Buchse 72 ebenfalls gedreht, da der Sicherungsring 144 auch eine Drehverbindung zwischen Mutter 94 und Buchse 72 herstellt. Die Kolbenstangenverlängerung bzw. die Rundkopfschraube 80 ist gegen eine Drehbewegung mittels des Gelenkbolzens 54 in der Halterung 46 drehgesichert. In einem anderen, in der Zeichnung jedoch nicht dargestellten Ausführungsbeispiel, kann die Mutter 94 mit Bezug auf die Kolbenstange 66 frei drehen, wobei es vorteilhaft ist, wenn die Mutter 94 axial nicht verstellt wird, obwohl dies von weniger großer Bedeutung ist. Eine unabhängige Verstellung der beiden Kolbenstangenverlängerungen an den beiden Tragarmen 42 ermöglicht eine genauere Ausrichtung der Haspel 30mit Bezug auf das Schneidwerk 32. Ebenso ist es möglich, durch die Kolbenstangenverlängerung 80 die Haspel 30 oberhalb des Schneidwerkes 32 auf bestimmte Höhenlagen einzustellen. Die Feineinstellung der Haspel 30 wird dann vorgenommen, wenn die Haspel 30 abgesenkt ist, d. h. wenn die hydraulische Stellvorrichtung 50 vollständig eingefahren ist. Damit soll sichergestellt werden, daß der Schraubenbolzen 80 nur so weit in die Mutter 94 eingedreht wird, bis der gewünschte minimale Abstand erreicht wird, auch dann, wenn ein weiteres Hineindrehen des Schraubenbolzens möglich wäre. Ist die Feineinstellung bei abgeschalteter Haspel vorgenommen worden, so kann sich die Bedienungsperson später darauf verlassen, daß beim erneuten Absenken der Haspel 30 die Zinken 31 nun nicht zwischen die Schnittflächen des Schneidwerkes 32 gelangen, da durch den Anschlag des Kolbens im Hydraulikzylinder 56 bei völlig eingefahrener Kolbenstange 66 gewährleistet ist, daß ein Minimumabstand zwischen der Haspel 30 und dem Schneidwerk 32 gewährleistet wird.

Um die Handhabung zu erleichtern, kann die Mutter 94 jeweils um eine halbe Drehung oder um eine viertel Drehung statt um 360° gedreht werden, indem der Ringschlüsselteil 132 nach einer bestimmten Drehung jeweils von dem Vierkantteil 106 der Mutter 94 abgezogen und dann in eine Ratschstellung gebracht wird, in der der Griff 112 mit dem Ringschlüsselteil 132 auf dem zylindrischen Teil der Mutter 94 frei gedreht werden kann, um dann in anderer Stellung erneut auf dem Vierkantteil 106 aufgesetzt zu werden. Fig. 4 zeigt die hydraulische Stellvorrichtung 50 mit kleinster Länge, d. h. in einer Stellung, in der die Rundkopfschraube 80 voll in die Mutter 94 eingeschraubt ist. Der Einsatz der Stellvorrichtung 50 zur Feineinstellung ist dann besonders vorteilhaft, wenn der Verstellspielraum größer ist als der Lochabstand zwischen den Bohrungen 28 der Halterung 26.

Ein wesentliches Sicherheitsmerkmal besteht darin, daß der Spannring 142 am Ende der Rundkopfschraube 80 verhindert, daß diese aus der Mutter 94 herausgedreht wird, so daß die Haspel 30 nicht aufgrund ihres Eigengewichtes unbeabsichtigterweise nach unten fallen kann.

Wenn die erforderliche Einstellung der Haspel 30 mit Bezug auf das Schneidwerk 32 vorgenommen worden ist, wird der Griff 112 erneut für den Feldeinsatz gesichert, indem die Kette 150 an den Griff 112 angeschlossen (siehe Fig. 1) und dabei der Ringschlüsselteil 132 auf den Vierkantteil 106 der Mutter 94 aufgesetzt wird, so daß eine Drehung der Mutter 94 mit Bezug auf die Rundkopfschraube 80 verhindert wird und somit eine Einstellung an der Kolbenstangenverlängerungseinrichtung, wenn die Kolbenstange 66 während des Arbeitseinsatzes ein- oder ausgefahren wird. Ein weiterer Vorteil in der Verwendung des Griffes 112 ist darin zu sehen, daß dieser auch als Endlagesicherung bzw. als Stopeinrichtung in Verbindung mit dem Hydraulikzylinder 50 verwendet werden kann und dadurch gewährleistet, daß die Haspel 30 nicht unbeabsichtig abgesenkt wird, so daß weder eine Bedienungsperson verletzt noch eine Beschädigung an der Erntebergungsvorrichtung 10 hervorgerufen werden kann, beispielsweise auch dann, wenn an der Erntebergungsvorrichtung 10 eine Reparatur bzw. eine Einstellung notwendig ist.

Ist die Kolbenstange 66 vollständig ausgefahren, so wird der Griff 112 in seine Stopposition (siehe Fig. 4 und 5) gebracht und mittels der Federklammer 138 an der Kolbenstange 66 gesichert, so daß der Griff 112 in dieser Stellung verbleibt und dadurch jede weitere Verstellung der Kolbenstange 66 in den Hydraulikzylinder 56 verhindert, da die Stopfläche 118 des Griffes 112 gegen die obere Stirnseite bzw. das Ende 62 des Hydraulikzylinders 56 zur Anlage kommt. In dieser Stellung liegt, wie aus Fig. 4 hervorgeht, die obere Fläche des Ringschlüsselteils 132 gegen den Flansch 100 der Mutter 94 an, der somit als Anlagefläche dient, um irgendwelche abwärts gerichteten Kräfte, die von der Haspel 30 ausgehen, auf den Griff 112 und somit auf den Hydraulikzylinder 56 zu übertragen. Es wird als besonders vorteilhaft angesehen, daß durch Drehen der Rundkopfschraube 80 in die Mutter 94 hinein oder aus dieser heraus die Funktion des Griffes 112 als Stoparm an der Kolbenstangeneinrichtung 64 nicht beeinflußt wird, so daß in der Stopstellung des Griffes 112 die Kolbenstange 66 stets soweit ausgefahren ist, daß der Griff 112 als Sicherheitsvorrichtung eingesetzt werden kann.

Die in der Anmeldung beschriebene Einstellvorrichtung für die Haspel 30 kann auch an anderer Stelle der Erntebergungsvorrichtung eingesetzt werden, beispielsweise an der Höhenverstellvorrichtung der Erntebergungsvorrichtung 10, beispielsweise am Hydraulikzylinder 16, um eine entsprechende Höhenverstellung der Erntebergungsvorrichtung vorzunehmen bzw. eine genaue Nivellierung bzw. Ausrichtung der Erntebergungsvorrichtung 10 über die gesamte Breite zu ermöglichen, wobei diese Vorrichtung ebenfalls als Sicherheitsarretiervorrichtung eingesetzt werden kann.

Die im Ausführungsbeispiel dargestellte Einstellvorrichtung kann darüber hinaus grundsätzlich zwischen zwei Arbeitskomponenten vorgesehen werden, die über einen Linearkolbenmotor miteinander verbunden sind, der dazu dient, den Abstand zwischen den beiden Arbeitskomponenten zu verändern, ohne daß die Einstellvorrichtung bzw. der Linearkolbenmotor mit seinem Linearkolben von den Arbeitskomponenten gelöst werden muß. Dabei kann die Einstellvorrichtung, die aus einer Kolbenstangenverlängerung sowie aus einer Mutter bestehen kann, die am Ende der Kolbenstange angeschlossen ist, in vorteilhafter Weise in den Linearkolben oder in die Linearkolbenstange bzw. in den Linearkolbenmotor so integriert werden, daß sie unabhängig von der Bedienung des Linearkolbenmotors zur Einstellung des Abstandes zwischen den beiden Enden des Linearkolbenmotors einsetzbar ist. Um den Abstand zwischen den beiden Enden des Linearkolbenmotors zu verändern, können diesem Stellelemente zugeordnet sein. Die Kolbenstangenverlängerung kann dabei in vorteilhafter Weise in einer Mutter drehbar aufgenommen sein und über diese Mutter axial verstellt werden. Die Mutter kann hierzu in einer Zylinderbohrung der Linearkolbenstange drehbar gelagert sein.

Es ist jedoch auch möglich, daß die Kolbenstangenverlängerung bzw. die Rundkopfschraube 80 an ihrem dem Gewindeteil gegenüberliegenden Ende einen über Sicherungsteile axial unverschiebbaren Drehflansch aufweist, der über Gelenkbolzen 54 an den Tragarm 42 schwenkbar angeschlossen ist. Diese in der Zeichnung nicht dargestellte Variante ermöglicht die Einsparung der Mutter 94 zur Verstellung der Rundkopfschraube. In diesem Falle ist es jedoch vorteilhaft, daß die Kolbenstangenverlängerung bzw. die Rundkopfschraube 80 unterhalb des Drehflansches einen Vierkantteil aufweist, auf den der Ringschlüsselteil 132 des Griffes bzw. Hebels 112 aufgeschoben werden kann, um die Kolbenstangenverlängerung zu drehen und somit den Abstand zwischen dem Ende der Kolbenstangenverlängerungen und dem Ende des Hydraulikzylinders zu verändern. Auch in diesem Ausführungsbeispiel kann der Hebel 112 zwischen den Drehflansch der Kolbenstangenverlängerung und der Stirnseite des Hydraulikzylinders 56 geschwenkt werden, um somit bei ausgefahrener Kolbenstange 66 eine unbeabsichtigte Rückstellung der Kolbenstange zu verhindern.

**Patentansprüche.**

1. Landwirtschaftlich nutzbare Maschine mit einem Rahmen, an dem eine erste und zweite Arbeitskomponente (30, 32) und eine hydraulische Stellvorrichtung (50) mit einem eine Kolbenstange (66) aufweisenden Linearkolbenmotor angeordnet ist, die zur Steuerung des Abstandes zwischen den beiden Arbeitskomponenten (30, 32) dient und die eine dem Linearkolbenmotor zugeordnete Einstellvorrichtung (86, 96) aufweist, wobei der Linearkolbenmotor einenends mittel- oder unmittelbar an der ersten Arbeitskomponente (30) und anderenends an der zweiten Arbeitskomponente (32) angeschlossen ist, dadurch gekennzeichnet, daß die Einstellvorrichtung (86, 96) derart in den Linearkolbenmotor integriert ist, daß sie unabhängig von der Bedienung des Linearkolbenmotors zur Einstellung des Abstandes zwischen den beiden Enden des Linearkolbenmotors (56) einsetzbar ist und hierzu ein Stellelement (110, 112) aufweist, das mit dem Linearkolbenmotor bzw. der Einstellvorrichtung (86, 96) in Wirkverbindung bringbar und zwischen zwei Arbeitsstellungen verstellbar ist, wobei mittels des Stellelementes (110, 112) in der einen Arbeitsstellung die Einstellvorrichtung (86, 96) betätigbar ist und in der zweiten Stellung die Rückstellung des Linearkolbenmotors begrenzbar ist.

2. Landwirtschaftlich nutzbare Maschine nach Anspruch 1, dadurch gekennzeichnet, daß neben dem ersten Linearkolbenmotor ein zweiter gleich ausgebildeter Linearkolbenmotor vorgesehen ist, der mit Abstand zum ersten Linearkolbenmotor angeordnet ist und in dem ebenfalls eine Einstellvorrichtung (86, 96) integriert ist.

3. Landwirtschaftlich nutzbare Maschine mit einer eine Schneidwerksvorrichtung (32) aufweisenden Ernteabergungsvorrichtung (10), auf der eine Haspel (30) schwenkbar gelagert ist, nach Anspruch 1, dadurch gekennzeichnet, daß die die Einstellvorrichtung (86, 96) integrierend aufnehmenden Linearkolbenmotoren je einen Hydraulikzylinder (56) mit je einer Kolbenstange (66) aufweisen, in deren freies bzw. äußeres Ende eine Gewindebohrung (98) zur drehbaren Aufnahme einer Kolbenstangenverlängerung (80) mit einem Gewinde (86) konzentrisch vorgesehen ist, die über eine Gelenkverbindung (46, 54) an Tragarmen (42) der Haspel (30) angeschlossen ist.

4. Landwirtschaftlich nutzbare Maschine nach Anspruch 1, dadurch gekennzeichnet, daß das Stellelement (110, 112) ein als Arretierungsvorrichtung ausgebildeter Hebel (112) ist, der in eine bestimmte Stellung verschwenkbar und zur axialen Verstellung der Kolbenstangenverlängerung (80) als Drehmomentenarm einsetzbar ist.

5. Landwirtschaftlich nutzbare Maschine nach Anspruch 4, dadurch gekennzeichnet, daß der Hebel (112) auf der Kolbenstange (66) axial verschiebbar angeordnet und zwischen einer Stellung, in der der Hebel (112) frei drehbar gelagert und einer zweiten Stellung verstellbar ist, in der der Hebel (112) in eine drehfeste Verbindung mit der Kolbenstangenverlängerung (80) bringbar ist.

6. Landwirtschaftlich nutzbare Maschine nach Anspruch 4 oder 5, dadurch gekennzeichnet, daß der Hebel (112) gelenkig an die Kolbenstangenverlängerung (80) mittel- oder unmittelbar angeschlossen ist und für den Ernteeinsatz zwischen einer Ruhestellung und einer Arretierungsstellung verstellbar ist, wobei in der Arretierungsstellung die Kolbenstange (66) aus dem Hydraulikzylinder (56) herausgefahren und der Hebel (112) gegen eine Stirnfläche (118) des Hydraulikzylinders (56) zur Anlage bringbar ist.

7. Landwirtschaftlich nutzbare Maschine nach einem oder mehreren der vorherigen Ansprüche, dadurch gekennzeichnet, daß am freien Ende der Kolbenstange (66) eine Mutter (94) mit einem inneren Gewinde lösbar und drehfest angeschlossen ist, das zur Aufnahme der Kolbenstangenverlängerung (80) dient, an deren innerem Ende ein Arretierungselement (142) vorgesehen ist, das ein Herausdrehen der Kolbenstangenverlängerung (80) aus der Mutter (94) verhindert.

8. Landwirtschaftlich nutzbare Maschine nach einem oder mehreren der vorherigen Ansprüche, dadurch gekennzeichnet, daß die Gelenkverbindung zwischen dem Hebel (112) und der Mutter (94) aus einem eine Mehrkantöffnung (136) aufweisenden, an den Hebel (112) schwenkbar angeschlossenen Ring (130) besteht, der auf einen auf der Mutter (94) vorgesehenen Mehrkantteil (108) und auf einen sich daran anschließenden zylindrischen Körper (96) wechselweise aufschiebbar ist, an den sich ein zylindrischer Flansch (100) anschließt, der in der Arretierungsstellung des Hebels (112) eine weitere Axialverstellung des Ringes (130) verhindert.

9. Landwirtschaftlich nutzbare Maschine nach einem oder mehreren der vorherigen Ansprüche, dadurch gekennzeichnet, daß der Hebel (112) aus zwei mit Abstand zueinander angeordneten Seitenteilen (114) besteht, die über einen Steg (116) miteinander verbunden sind, wobei der Hebel (112) einenends zwei Gelenkbolzen (134) zum Anschluß des Ringes (130) und anderenends eine federelastische Sicherung (138) aufweist, die den Hebel (112) an der Kolbenstange in der die Kolbenstange arretierenden Stellung sichert.

10. Landwirtschaftlich nutzbare Maschine nach einem oder mehreren der vorherigen Ansprüche, dadurch gekennzeichnet, daß die Kolbenstangenverlängerung (80) gelenkig, jedoch drehfest mit einem Tragarm (42) der Haspel (30) verbunden ist, wobei die Mutter (94) in einer Bohrung (70) der Kolbenstange (66) bzw. in einer Buchse (64) drehbar oder drehfest sowie axial unverschiebbar aufgenommen ist.

11. Landwirtschaftlich nutzbare Maschine nach einem oder mehreren der vorherigen Ansprüche, dadurch gekennzeichnet, daß die Kolbenstangenverlängerung (80) an ihrem dem Gewinde gegenüberliegenden Ende einen über Sicherungsteile axial unverschiebbaren Drehflansch aufweist, der über Gelenkbolzen (54) an den Tragarm (42) schwenkbar angeschlossen ist.

**Claims**

1. A machine for use in agriculture, having a frame means on which are arranged first and second working components (30, 32) and a hydraulic control means (50) with a linear piston motor having a piston rod (66) which serves to control the spacing between the two working components (30, 32) and which has an adjusting means (86, 96) associated with the linear piston motor, wherein the linear piston motor is connected at one end directly or indirectly to the first working component (30) and at the other end to the second working component (32) characterised in that the adjusting means (86, 96) is integrated into the linear piston motor in such a way that it can be used independently of operation of the linear piston motor for adjusting the spacing between the two ends of the linear piston motor and for that purpose has a control element (110, 112) which can be operatively connected to the linear piston motor and the adjusting means (86, 96) respectively and is displaceable between two working positions, wherein the adjusting means (86, 96) is actuable by means of the control element (110, 112) in one working position and resetting of the linear piston motor can be limited in the second position.

2. A machine for use in agriculture according to claim 1 characterised in that, besides the first linear piston motor, there is a second linear piston motor of the same construction, which is arranged at a spacing from the first linear piston motor and in which an adjusting means (86, 96) is also integrated.

3. A machine for use in agriculture with a crop collecting means (10) which has a cutting means (32) and on which a drum (30) is rotatably mounted, according to claim 1, characterised in that the linear piston motors which accomodate the adjusting means (86, 96) in integrated form each have a hydraulic cylinder (56) with a respective piston rod (66), in the free or outer end of which there is concentrically provided a screwthreaded bore (98) for rotatably receiving a piston rod extension portion (80) with a screwthread (86), which is connected by way of a pivot connection (46, 54) to carrier arms (42) of the drum (30).

4. A machine for use in agriculture according to claim 1 characterised in that the control element (110, 112) is a lever (112) which is formed as an arresting means and which can be pivoted into a given position and which can be used for axially displacing the piston rod extension portion (80), as a torque arm.

5. A machine for use in agriculture according to claim 4 characterised in that the lever (112) is axially displaceably disposed on the piston rod (66) and is movable between a position in which the lever (112) is freely rotatably mounted and a second position which the lever (112) can be non-rotatably connected to the piston rod extension portion (80).

6. A machine for use in agriculture according to claim 4 or claim 5 characterised in that the lever (112) is pivotally connected directly or indirectly to the piston rod extension portion (80) and is displaceable for harvest use between a rest position and an arresting position, wherein in the arresting position the piston rod (66) is extended from the hydraulic cylinder (56) and the lever (112) can be brought to bear against an end face (118) of the hydraulic cylinder (56).

7. A machine for use in agriculture according to one or more of the preceding claims characterised in that a nut (94) with an internal screwthread is releasably and non-rotatably connected to the free end of the piston rod (66), which screwthread serves to receive the piston rod extension portion (80), on the inner end of which is provided an arresting element (142) which prevents the piston rod extension portion (80) from being screwed out of the nut (94).

8. A machine for use in agriculture according to one or more of the preceding claims characterised in that the pivotal connection between the lever (112) and the nut (94) comprises a ring (130) which has a polygonal opening (136) and which is connected pivotally to the lever (112) and which can be alternately fitted onto a polygonal portion (108) provided on the nut (94) and onto a cylindrical body (96) which adjoins same and which is adjoined by a cylindrical flange (100) which, in the arresting position of the lever (112), prevents further axial displacement of the ring (130).

9. A machine for use in agriculture according to one or more of the preceding claims characterised in that the lever (112) comprises two mutually spaced-apart side portions (114) which are connected together by a web portion (116), wherein the lever (112) is provided at one end with two pivot pins (134) for connecting the ring (130) thereto and at the other end with a resilient securing means (138) which secures the lever (112) to the piston rod in the position of arresting the piston rod.

10. A machine for use in agriculture according to one or more of the preceding claims characterised in that the piston rod extension portion (80) is pivotally but non-rotatably connected to a carrier arm (42) of the drum (30), wherein the nut (94) is axially displaceably and respectively rotatably and non-rotatably received in a bore (70) in the piston rod (66) and in a bush (64) respectively.

11. A machine for use in agriculture according to one or more of the preceding claims characterised in that, at its end remote from the screwthread, the piston rod extension portion (80) has a rotary flange which is axially non-displaceable by way of securing members and which is pivotally connected to the carrier arm (42) by way of pivot pins (54).

**Revendications**

1. Machine utilisable en agriculture, comportant un châssis sur lequel sont prévus un premier et un second équipements de travail (30, 32) et un dispositif de positionnement hydraulique (50) comportant un vérin à piston à mouvement linéaire comprenant une tige de piston (66), servant à la commande de l'écartement entre les deux équipements de travail (30, 32) et comprenant un dispositif de réglage (86, 96) conjugué à ce vérin à piston à mouvement linéaire, ledit vérin à piston à mouvement linéaire étant relié par une extrémité directement ou indirectement au premier équipement de travail (30) et par son autre extrémité au second équipement de travail (32), caractérisée en ce que le dispositif de réglage (86, 96) est intégré au vérin à piston à mouvement linéaire de façon telle qu'indépendamment de la commande de ce vérin il puisse être utilisé pour le réglage de l'écartement entre les deux extrémités dudit vérin (56), et en ce qu'il comporte à cet effet un élément de positionnement (110, 112) qui peut être relié fonctionnellement au vérin à piston à mouvement linéaire ou au dispositif de réglage (86, 96) et qui est déplaçable entre deux positions de travail, le dispositif de réglage (86, 96) puvant, dans une position de travail, être actionné au moyen de l'élément de positionnement (110, 112), tandis que dans la seconde position le rappel du vérin à piston à mouvement linéaire peut être limité.

2. Machine utilisable en agriculture suivant la revendication 1, caractérisée en ce qu'il est prévu, outre le premier vérin à piston à mouvement linéaire, un second vérin à piston à mouvement linéaire agencé de la même manière, qui est écarté du premier vérin (56) et auquel est intégré également un dispositif de réglage (86, 96).

3. Machine utilisable en agriculture, comportant un ensemble de récolte (10) comprenant un mécanisme de coupe (32) et sur lequel un rabatteur (30) est monté de façon pivotante, suivant la revendication 1, caractérisée en ce que les vérins à piston à mouvement linéaire auxquels le dispositif de réglage (86, 96) est intégré comportent chacun un cylindre hydraulique (56) associé à une tige de piston (66) dans l'extrémité libre ou extérieure de laquelle il est prévu concentriquement un taraudage (98) pour la réception à rotation d'une allonge de tige de piston (80) munie d'un filetage (86), qui est reliée par une liaison articulée (46, 54) aux bras de support (42) du rabatteur (30).

4. Machine utilisable en agriculture suivant la revendication 1, caractérisée en ce que l'élément de positionnement (110, 112) est constitué par un levier (112) agencé à la manière d'un dispositif d'arrêt ou de blocage qui peut être déplacé par pivotement dans une position déterminée et qui peut servir de bras de transmission du couple pour le déplacement axial de l'allonge de tige de piston (80).

5. Machine utilisable en agriculture suivant la revendication 4, caractérisée en ce que le levier (112) est mobile axialement sur la tige de piston (66) et peut être déplacé entre une position dans laquelle ce levier (112) peut tourner librement et une seconde position dans laquelle ledit levier (112) peut être amené dans une position de solidarisation angulaire avec l'allonge de tige de piston (80).

6. Machine utilisable en agriculture suivant la revendication 4 ou 5, caractérisée en ce que le levier (112) est relié directement ou indirectement à articulation à l'allonge de tige de piston (80) et est déplaçable pour le travail de récolte entre une position de repos et une position d'arrêt ou de blocage, la tige de piston (66) pouvant, dans la position d'arrêt, être sortie du cylindre hydraulique (56), le levier (112) pouvant être amené dans une position d'appui contre une surface terminale (118) de ce cylindre hydraulique (56).

7. Machine utilisable en agriculture suivant l'une quelconque des revendications précédentes, caractérisée en ce qu'il est prévu, à l'extrémité libre de la tige de piston (66), en écrou (94) muni d'un filetage intérieur (98), monté de façon dégageable mais bloqué angulairement, cet écrou servant à la réception de l'allonge de tige de piston (80), à l'extrémité intérieure de laquelle il est prévu un élément d'arrêt (142) qui s'oppose à un dégagement par rotation de l'allonge de tige de piston (80) hors de l'écrou (94).

8. Machine utilisable en agriculture suivant l'une quelconque des revendications précédentes, caractérisée en ce que la liaison articulée entre le levier (112) et l'écrou (94) est constituée par une bague (130) reliée da façon pivotante au levier (112) et munie d'un orifice de forme polygonale (136), cette bague pouvant être engagée sélectivement sur une partie de forme polygonale (108) prévue sur l'écrou (94) et sur un corps cylindrique (96) se raccordant à la partie précitée et terminé par une bride cylindrique (100) qui, dans la position d'arrêt ou de blocage du levier (112), s'oppose à tout déplacement axial de la bague (130).

9. Machine utilisable en agriculture suivant l'une quelconque des revendications précédentes, caractérisée en ce que le levier (112) est formé de deux parties latérales (114) écartées l'une de l'autre, qui sont reliées entre elles par une branche transversale (116), ce levier (112) comportant à une extrémité deux axes d'articulation (134) en vue de son raccordement à la bague (130) et, à l'autre extrémité, un élément de retenue élastique (138), qui maintient le levier (112) sur la tige de piston dans la position d'arrêt de cette tige de piston.

10. Machine utilisable en agriculture suivant l'une quelconque des revendications précédentes, caractérisée en ce que l'allonge de tige de piston (80) est reliée de façon articulée à un bras de support (42) du rabatteur (30), tout en étant angulairement fixe, l'écrou (94) étant engagé de manière rotative ou avec blocage angulaire, ainsi que dans une condition de retenue axiale, dans un perçage (70) de la tige de piston (66) ou dans une douille (72).

11. Machine utilisable en agriculture suivant l'une quelconque des revendications précédentes, caractérisée en ce que l'allonge de tige de piston (80) comporte, à son extrémité opposée au filetage, une bride rotative dont le déplacement axial est empêché par des parties de retenue et qui est reliée de façon pivotante au bras de support (42) par des axes d'articulation (54).

FIG. I

FIG. 2

FIG. 3

FIG. 4

FIG. 5